Europäisches Patentamt

**European Patent Office**

**Office européen des brevets**

(19)

(11) Veröffentlichungsnummer: **0 086 506**
**B1**

(12) **EUROPÄISCHE PATENTSCHRIFT**

(45) Veröffentlichungstag der Patentschrift:
**27.12.85**

(21) Anmeldenummer: **83200023.6**

(22) Anmeldetag: **05.02.83**

(51) Int. Cl.⁴: **F 02 C 6/16**

(54) **Einrichtung zur Vermeidung des Ausblasens der Wasservorlage von Gleichdruckluftspeicheranlagen für Gasturbinenkraftwerke.**

(30) Priorität: **17.02.82 CH 973/82**

(43) Veröffentlichungstag der Anmeldung:
**24.08.83 Patentblatt 83/34**

(45) Bekanntmachung des Hinweises auf die Patenterteilung:
**27.12.85 Patentblatt 85/52**

(84) Benannte Vertragsstaaten:
**CH DE GB LI SE**

(56) Entgegenhaltungen:
**EP - A - 0 030 040**
**EP - A - 0 030 744**
**EP - A - 0 044 581**
**DE - A - 2 321 533**
**DE - A - 2 939 633**

(73) Patentinhaber: **BBC Aktiengesellschaft Brown, Boveri & Cie., Haselstrasse, CH-5401 Baden (CH)**

(72) Erfinder: **Saleh, Abdel, Dr., Rheinstrasse 30, D-7891 Hohentengen-Herdern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die vorliegende Erfindung betrifft eine Einrichtung zur Vermeidung des Ausblasens der Wasservorlage von Gleichdruckluftspeicheranlagen für Gasturbinenkraftwerke nach dem Oberbegriff des Patentanspruchs 1.

Gleichdruckluftspeicheranlagen für Gasturbinenkraftwerke benötigen gegenüber gleich leistungsfähigen Luftspeicheranlagen mit variablem Luftdruck, der im Betrieb zwischen gewissen Grenzen schwanken darf, nur etwa ein Drittel des Volumens der letzteren. Dementsprechend sind der bauliche Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine Wasservorlage mit einer Wassersäule zum Ausgleich des in der Kaverne verbrauchten Luftvolumens, die in ein freies, gewöhnlich an der Erdoberfläche liegendes Bassin mündet und deren statische Druckhöhe dem in der Kaverne aufrechtzuerhaltenden Druck entspricht. Beim Laden der Kaverne, die bei heutigen Anlagen in 600—800 m Tiefe liegt, entsprechend einem statischen Druck der Wassersäule von 60—80 bar, wird das Wasser in das Bassin hinaufgedrückt, beim Entladen läuft das Wasser aus dem Bassin in die Kaverne nach, um den gleichen Druck sicherzustellen.

Beim Betrieb von Luftspeichergasturbinenanlagen wird beim Laden der Kaverne die im Wasserschacht für die Wasservorlage aufsteigende Wassersäule die in ihr gelöste Luft freigeben, wodurch Luftblasen mit nach oben hin rasch zunehmendem Volumen entstehen, die eine Dichteabnahme in der Wassersäule und Schwingungen derselben bewirken. Im Extremfall könnte die Wassersäule vom Druckluftpolster ausgeblasen werden und die Kaverne sich somit vollständig entleeren.

Gegenüber der normalen Lösungsgeschwindigkeit von Luft in ruhendem Wasser erfolgt in der Kaverne die volle Sättigung infolge der Verwirbelung des Wassers bei den Lade- und Entladevorgängen rascher, da hierbei bald einmal alle Wasserteilchen an der Oberfläche mit der Luft in Berührung kommen. Die dabei vom Wasser aufgenommene Gewichtsmenge an Luft ist proportional dem Druck, der, wie gesagt, zwischen 60 und 80 bar liegt. Über die dabei gelöste Luftmenge gibt folgender Vergleich Aufschluß:

Bei 1 bar Luftdruck und 10°C Temperatur enthält 1 m$^3$ Wasser ( = 1000 kg) 29,2 g Luft.

Bei 60 bar Druck und 10°C Temperatur enthält 1 m$^3$ Wasser 1,7 kg Luft, also die etwa 58fache Gewichtsmenge. Bei Atmosphärendruck entsprechen diese 1,7 kg ca. 1,32 m$^3$. Ein von 60 bar Druck auf atmosphärischen Druck entspanntes Wasser/Luft-Gemisch enthält also volumenmäßig mehr Luft als Wasser.

Wenn derart mit Luft gesättigtes Wasser aus der Kaverne nach oben steigt, so wird durch den abnehmenden hydrostatischen Druck die Luft frei und bildet immer größere Blasen. Die durchschnittliche Dichte der Wassersäule wird damit immer kleiner und es kommt zu Schwingungen derselben. Dies kann, wenn nicht entsprechende Vorkehrungen getroffen werden, zum Ausblasen des Druckluftpolsters mit der Wassersäule führen.

Eine bisher bekanntgewordene Maßnahme zur Verhütung dieses Ausblasens besteht darin, den die Wassersäule enthaltenden Wasserschacht in einem U-förmigen Bogen unter die Sohle der Kaverne hinab zu verlängern. Der tiefste Punkt des Wasserschachtes muß dabei um mindestens 0,15 h unter dem jeweiligen Wasserspiegel in der Kaverne liegen, wobei h die wirksame Druckhöhe, d. h., die Differenz zwischen den geodätischen Höhen des Oberwasserspiegels im Ausgleichsbecken und des Kavernenwasserspiegels bedeutet.

Für h = 600 m würde dies bedeuten, daß der bereits 600 m lange Wasserschacht noch um mindestens 90 m tiefer geführt werden müßte, und zwar doppelt, was einen hohen baulichen Mehraufwand darstellen würde.

Andere Vorschläge zielen darauf ab, mit Hilfe einer Schutzschicht auf der Wasseroberfläche, beispielsweise einer Folie, einer schwer verdunstenden Flüssigkeitsschicht oder einer Schicht kleiner, eine zusammenhängende Abdeckung bildender Schwimmkörper den Kontakt zwischen Luft und Wasser ganz oder teilweise zu unterbinden. Ein weiterer Vorschlag geht dahin, das in der Wasservorlage rasch aufsteigende Wasser/Luft-Gemisch zu bremsen und durch zweckentsprechende Einbauten die Luftblasen vom Wasser zu trennen. Die ideale Methode, nämlich die vollständige Unterbindung des Kontaktes zwischen Luft und Wasser an der Wasseroberfläche, läßt sich praktisch sehr schwer realisieren und ob die übrigen Methoden verhindern können, daß, besonders nach längeren Stillständen, mehr oder weniger spontane Luftausscheidungen in der Wasservorlage entstehen, welche die Wassersäule zum Schwingen bringen, bleibt abzuwarten. Solche Schwingungen verursachen Druckschwankungen in der gespeicherten Luft, die sich in erster Linie störend auf den Verdichterbetrieb auswirken können.

Neuerdings ist auch ein Verfahren und eine danach arbeitende Einrichtung für den gegenständlichen Zweck vorgeschlagen worden EP-A-44 581, die darauf beruhen, die hauptsächlich mit Luft angereicherte, oberflächennahe Wasserschicht in der Kaverne über ein Rohrsystem dauernd abzusaugen und an die Wasseroberfläche des Ausgleichsbeckens zu pumpen, wo dieses Wasser wegen des niedrigeren Druckes die gelöste Luft abgibt. Das abgesaugte Wasser wird dabei aus der Wasservorlage kontinuierlich oder intermittierend durch entlüftetes Wasser aus dem Ausgleichsbecken ersetzt. Im Wasserschacht befindet sich demnach nur entlüftetes Wasser, da aus der Kaverne keine Luft in den Wasserschacht hineindiffundieren kann.

Die Einrichtung zur Realisierung dieses Verfahrens weist in der Kaverne einen auf der Wasseroberfläche schwimmenden Röhrenrost auf, der sich aus einer Anzahl perforierter Rohre, einem Sammelrohr und aus einer Anzahl von Schwimmern zusammensetzt. Die perforierten Rohre münden in das Sammelrohr, aus dem aus der oberflächennahen Schicht abgesaugtes Wasser über ein Pendelrohr in der Kaverne und ein im Wasserschacht fixiertes Absaugrohr durch eine Pumpe über ein weiteres Pendelrohr im Ausgleichsbecken in die oberflächennahe Wasserschicht desselben gefördert wird, wo die Entlüftung des abgesaugten lufthaltigen Wassers durch einen weiteren Röhrenrost erfolgt.

Es ist anzunehmen, daß die Absaugeinrichtung einer solchen Anlage nicht ständig in Betrieb zu sein braucht, sondern daß es vielmehr genügt, sie über die Wochenenden und bei Speicherrevisionen ohne Speicherentleerung einzuschalten. Während normaler Arbeitstage, an denen praktisch der ganze Wasserinhalt der Kaverne ins Ausgleichsbecken gelangt und damit entlüftet wird, wird man sie im allgemeinen außer Betrieb setzen können.

Nachteilig ist bei dieser Konzeption das Vorhandensein bewegter Teile, wie der Pumpe, bei der mit Kavitation gerechnet werden muß, ferner die Gelenkverbindungen zwischen den feststehenden und den pendelnden Abschnitten der Absaugleitung, die der Abnützung unterliegen und, ebenso wie die Pumpe, einer gewissen Wartung bedürfen. Außerdem stellt der schwimmende Röhrenrost mit seinen Vertikalführungen ein baulich aufwendiges und dementsprechend teures Gebilde dar, das zudem schwierig zu installieren ist.

Ein ähnliches Verfahren ist in der DE-A-2 321 533 beschrieben. Die Einrichtung zu dessen Ausführung unterscheidet sich von jener nach der vorerwähnten EP-A-44 581 insofern, als die Kaverne mit der Wasservorlage über ein im Verhältnis zum Querschnitt des Wasserschachtes dünnes Steigrohr in Verbindung steht. Dies bedeutet, daß beim Laden der Kaverne das daraus verdrängte Wasser mit entsprechend dem Querschnittverhältnis von Kaverne und Steigrohr großer Geschwindigkeit im Steigrohr aufsteigt. Die Erfindung bezweckt, die Konzentration von Luft im Steigrohr zu verringern, zu welchem Zweck der obere Teil des Steigrohres durch den Flüssigkeitsdruck selbstöffnende Klappen aufweist, durch die beim Hochsteigen des Kavernenwassers im Steigrohr luftarmes Schachtwasser angesaugt wird. Oberhalb der genannten Klappe wird demnach die Geschwindigkeit im Steigrohr noch höher als im unteren Teil. Das verdrängte Wasser wird also bei einem schnellen Ladevorgang mit hoher Geschwindigkeit in das Ausgleichsbecken hochschließen und dadurch Sprühnebel in der Umgebung des Ausgleichsbeckens verursachen, was keineswegs erwünscht ist. Dazu kommt der wegen des größeren Strömungswiderstandes in dem engen Steigrohr höhere Leistungsbedarf der Verdichtergruppe gegenüber Kavernen, die mit dem Wasserschacht unmittelbar in Verbindung stehen.

Die vorliegende, im Patentanspruch 1 definierte Erfindung entstand aus der Aufgabe, die vorerwähnten Nachteile der bisher bekannten Einrichtungen der gegenständlichen Art zu vermeiden, wobei insbesondere ein einfacher Aufbau ohne bewegte Elemente und mit absoluter Betriebssicherheit gefordert waren.

Das für das Ingangsetzen der Entlüftung des Kavernenwassers benutzte Prinzip besteht dabei darin, daß durch Einleiten von Luft in den oberen Teil eines Steigrohres die oberhalb der Stelle der Lufteinleitung befindliche Wassersäule zum Aufsteigen gebracht und dadurch das Absaugen von stark lufthaltigen Oberflächenwasser aus der Kaverne ausgelöst wird. Es wird also im besagten oberen Teil des Steigrohres die Konzentration von Luft im Wasser erhöht. Dies im Gegensatz zum Prinzip, nach dem die Entlüftung gemäß dem erwähnten DE-A-2 321 533 erfolgt. Dort soll nämlich das Ausblasen der Wasservorlage durch Verringerung der Konzentration von Luft im aufsteigenden Wasser verhindert werden, indem diesem luftärmeres Schachtwasser zugeführt wird.

Die Erfindung wird im folgenden unter Bezugnahme auf ein in der Zeichnung dargestelltes Ausführungsbeispiel näher beschrieben. In der Zeichnung zeigt

Fig. 1 einen Vertikalschnitt durch eine Ausführungsform der Einrichtung, und

Fig. 2 einen Horizontalschnitt durch die Kaverne oberhalb der Wasserlinie entsprechend dem in Fig. 1 eingetragenen Schnittverlauf II-II.

Wie gesagt, besteht das Wirkungsprinzip der Einrichtung darin, daß durch Einleiten von Druckluft in eine Wassersäule, die mit der Wasservorlage im Wasserschacht über ein in der Kaverne fest verankertes Rohrsystem in Verbindung steht, in dieser Wassersäule eine nach oben gerichtete Saugströmung ausgelöst wird, die das stark lufthaltige Oberflächenwasser aus der Kaverne absaugt und dadurch ein Nachströmen von weniger lufthaltigem Wasser aus dem Wasserschacht bewirkt.

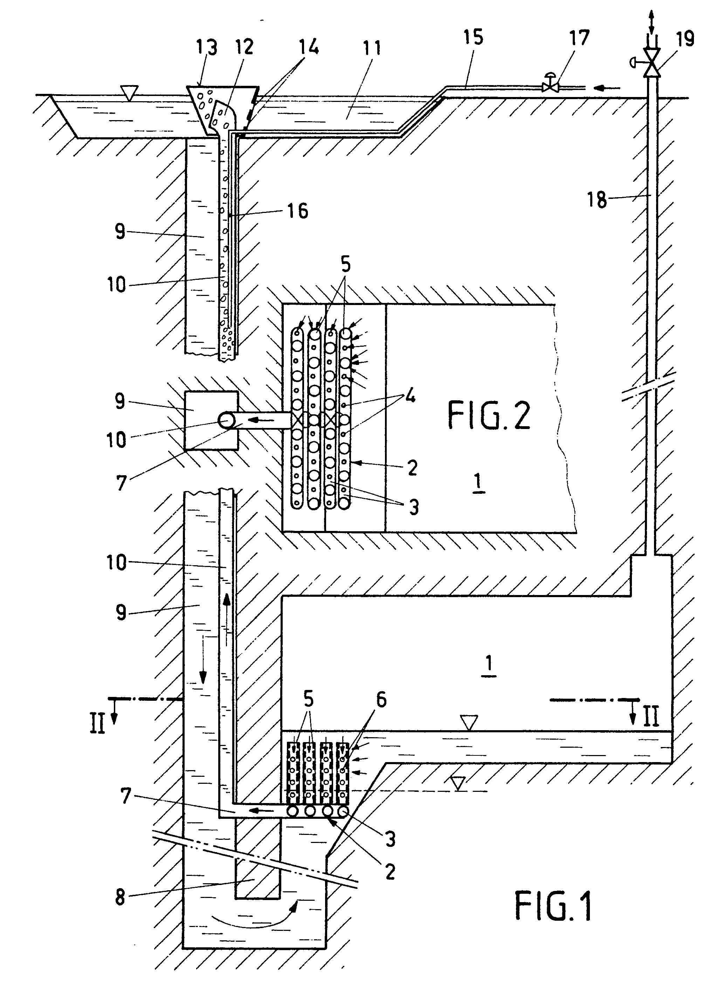

Die in den Fig. 1 und 2 gezeigte erfindungsgemäße Einrichtung weist in der Kaverne 1 in einer Höhe unterhalb des strichliert gezeichneten niedrigsten zulässigen Wasserstandes einen feststehenden Röhrenrost 2 auf, bestehend aus einer Anzahl paralleler, in einer Ebene liegender Rohre 3 mit über ihren Umfang und ihre Länge verteilten Sauglöchern 4. In diese Rohre 3 münden senkrechte Stehrohre 5, die ebenfalls über ihren Umfang und ihre Länge verteilte Sauglöcher 6 aufweisen. Die Rohre 3 sind in der Mitte ihrer Längsausdehnung an ein Sammelrohr 7 angeschlossen, das durch eine Trennwand 8 zwischen der Kaverne und dem Wasserschacht 9 in den letzteren geführt ist und sich dort nach oben in ein Steigrohr 10 fortsetzt. Dieses Steigrohr mündet im oberirdisch gelegenen Ausgleichsbecken 11, wo es zu einem Auslaßkopf 12 erweitert ist. Um diesen Auslaßkopf herum ist ein Abweistrichter 13 vorgesehen, dessen Mantel auf der dem Auslaßquerschnitt des Auslaßkopfes gegenüberliegenden Seite geschlossen ist, auf der anderen Seite hingegen mit Durchbrüchen 14 versehen ist, so daß das Innere des Trichters 13 mit dem Wasserinhalt des Ausgleichsbeckens kommuniziert.

Der Abweistrichter verhindert, daß das Wasser in der Umgebung der Steigrohrmündung, das in den Wasserschacht nachströmt, die ausgeschiedene Luft wieder nach unten mitnimmt. Dieselbe Wirkung erzielt man z. B. auch, indem man das Steigrohr im Ausgleichsbecken schräg oder abgewinkelt an eine vom Wasserschacht entfernte Stelle ausmünden läßt.

Oberhalb der Sohle des Ausgleichsbeckens tritt eine Druckluftleitung 15 in das Steigrohr 10 ein, die sich nach unten in das Steigrohr hinein in einem Belüftungsrohr 16 fortsetzt, dessen unteres Ende offen ist. Die Druckluftleitung 15 kann, von einem fernbedienbaren Ventil 17 gesteuert, von einer Druckluftquelle im Maschinenhaus der Kraftwerksanlage oder direkt vom Verdichter der Gasturbine mit Druckluft beschickt werden. Die vom Verdichter der Gasturbine kommende Verdichterluftleitung, über die die Kaverne gespeist wird, ist mit 18 und das Ventil zur Steuerung des Lade- und Entladevorgangs mit 19 bezeichnet.

Um eine Absaugung des luftgesättigten Oberflächenwassers in der Kaverne auszulösen, wird über die Druckluftleitung 15 Luft in das Belüftungsrohr 16 eingeleitet. Die Luft tritt am unteren Ende des Belüftungsrohres in das Steigrohr 10 aus und durchsetzt das Wasser mit Luftblasen, das dadurch nach oben steigt und damit die darunterliegende Wassersäule im Steigrohr und das Oberflächenwasser in der Kaverne über die Sauglöcher 4 und 6 im Röhrenrost 2 bzw. in den Stehrohren 5 nach oben saugt, während gleichzeitig das aus der Kaverne abgesaugte Wasser durch aus dem Wasserschacht 9 nachfließendes ergänzt wird.

Das abgesaugte Oberflächenwasser wirkt, solange es noch genügend Luft gelöst hat, nach Abstellen der Druckluftzuleitung in das Belüftungsrohr 16 infolge der sich beim Aufsteigen bildenden Luftblasen selbsttreibend. Die Zuleitung von Druckluft in das Belüftungsrohr ist also nur zur Auslösung des Entlüftungsvorgangs erforderlich und kann, sobald dieser in Gang gekommen ist, abgestellt werden, worauf der Austausch von selbst weiterläuft und nach vollständigem Ausgleich der Gaskonzentration im Oberflächenwasser zur Ruhe kommt. Der Austausch ist also nach Auslösung desselben selbstregelnd. Der Röhrenrost 2 hat dabei die Wirkung eines Strömungsgleichrichters, wodurch das aus dem Wasserschacht nachströmende Frischwasser beruhigt und seine Vermischung und damit der Luftausgleich mit dem luftgesättigten Oberflächenwasser gering gehalten wird.

Die Spülung braucht nur periodisch vorgenommen zu werden, je nach Anzahl der Ladevorgänge in einem bestimmten Zeitraum können die Spülintervalle kürzer oder länger sein, beispielsweise vier Wochen. Es dürfte beispielsweise vorteilhaft sein, Spülungen jeweils im Endstadium einer Aufladung durch kurzzeitiges Einblasen von Luft in das Steigrohr 10 auszulösen, wobei sich in diesem infolge der starken Dichteabnahme im Bereich der stärksten Luftausscheidung eine wesentlich höhere Geschwindigkeit einstellt als es allein infolge der Wasserverdrängung aus der Kaverne der Fall wäre. Das bedeutet aber, daß die Verdrängungsgeschwindigkeit der Wasservorlage im Wasserschacht 9 entsprechend geringer und damit das Ausblasen der Wasservorlage, der sogenannte »Champagnereffekt«, mit Sicherheit vermieden wird. Das eingangs genannte tiefe Hinunterziehen des U-förmigen Teiles des Wasserschachtes unter die Kaverne ist demnach nicht erforderlich, wodurch ein erheblicher Teil der Erstellungskosten eingespart wird.

Es ist bei dieser Einrichtung nicht nötig, die Kaverne abweichend von der kubischen Form beispielsweise mit schräger Sohle so auszubilden, daß der luftbenetzte Wasserspiegel bei voll- oder teilgeladener Kaverne kleiner ist als im entleerten Zustand, sofern der Konzentrationsgradient über den ganzen Wasserspiegel konstant ist. Dies kann hier als zutreffend angesehen werden, da beim Laden, wie erwähnt, starke Verwirbelungen vermieden werden.

Bei zu starker Aufladung der Kaverne kann die überschüssige Druckluft nach Unterschreitung des Mindestwasserstandes, d. h., des Niveaus, bei dem die Druckluft durch die Sauglöcher 4 über den Röhrenrost 2 und das Sammelrohr 7 in das Steigrohr 10 gelangt, durch dieses in das Ausgleichsbecken entweichen. Dabei sinkt der Druck in der Kaverne ab und es fließt Wasser aus dem Wasserschacht nach.

Anstatt das Belüftungsrohr 16 am oberen Ende des Steigrohres 10 in dieses einzuführen, kann es auch außerhalb desselben im Wasserschacht oder im benachbarten Erdreich verlaufen und an der Stelle, an der die Druckluft in das Steigrohr 10 ausgeblasen werden soll, seitlich in das Steigrohr einmünden. Auf diese Weise fällt die Beeinträchtigung des Strömungsquerschnittes im luftblasenführenden Endteil des Steigrohrs weg.

**Patentansprüche**

1. Einrichtung zur Vermeidung des Ausblasens der Wasservorlage in einem Wasserschacht (9) von Gleichdruckluftspeicheranlagen für Gasturbinenkraftwerke, die eine unterirdische Kaverne (1) zur Speicherung von Druckluft und Verbindungsleitungen zwischen der Kaverne (1) und dem Verdichter bzw. der Gasturbine sowie ein Ausgleichsbecken (11) aufweisen, das über den Wasserschacht (9) mit der Kaverne (1) in Verbindung steht, ferner mit einem in der Kaverne (1) befindlichen Röhrenrost (2) mit Sauglöchern (4) und einem mit dem Röhrenrost (2) leitend verbundenen Sammelrohr (7), das sich aus der Kaverne in den Wasserschacht (9) hinein erstreckt und sich in diesem nach oben in einem Steigrohr (10) fortsetzt, das ins Ausgleichsbecken (11) mündet, dadurch gekennzeichnet, daß ein mit einer Druckluftquelle in Verbindung stehendes Belüftungsrohr (16) in das Steigrohr (10) eintritt, daß das Belüftungsrohr (16) ein offenes Ende aufweist, das im oberen Teil des Wasserschachtes (9) in das Steigrohr (10) hinein ausmündet, daß der Röhrenrost (2) in der Kaverne (1) unterhalb des Niedrigstwasserschachtes fest verankert ist und oben offene Stehrohre (5) aufweist, die in die Rohre (3) des Röhrenrostes einmünden und Sauglöcher (6) aufweisen.

2. Einrichtung nach Anspruch 1, dadurch gekennzeichnet, daß das Steigrohr (10) im Ausgleichsbecken (11) in einem Auslaßkopf (12) endet, daß ein den Auslaßkopf (12) umgebender und mit dem Ausgleichsbecken (11) kommunizierender Abweistrichter (13) vorgesehen ist, und daß das Belüftungsrohr (16) oberhalb der Sohle des Ausgleichsbeckens (11) in das Steigrohr (10) eintritt.

3. Einrichtung nach Anspruch 1, dadurch gekennzeichnet, daß das Steigrohr (10) im Ausgleichsbecken (11) in einem Auslaßkopf (12) endet, daß ein den Auslaßkopf (12) umgebender und mit dem Ausgleichsbecken (11) kommunizierender Abweistrichter (13) vorgesehen ist, und daß das Belüftungsrohr außerhalb des Steigrohres (10) verläuft und an der Ausblasestelle der Druckluft seitlich in das Steigrohr (10) einmündet.

**Claims**

1. Device for preventing the blow-out of the water seal in a water shaft (9) of balanced-pressure air-storage installations for gas-turbine power stations which have an underground cavern (1) for storing compressed air, connecting lines between the cavern (1) and the compressor or gas turbine and an equalising basin (11) connected to the cavern (1) via the water shaft (9), also with a tube grate (2) located in the cavern (1) and having suction holes (4), and with a collecting pipe (7) which is connected conductively to the tube grate (2) and which extends out of the cavern into the water shaft (9) and continues in this upwards in the form of a riser pipe (10) opening into the equalising basin (11), characterised in that a venting pipe (16) connected to a compressed-air source penetrates into the riser pipe (10), in that the venting pipe (16) has an open end which opens into the riser pipe (10) in the upper part of the water shaft (9), and in the tube grate (2) is anchored firmly in the cavern (1) underneath the low-water shaft and has vertical pipes (5) open at the top which open into the tubes (3) of the tube grate and which have suction holes (6).

2. Device according to Claim 1, characterised in that the riser pipe (10) ends in the equalising basin (11) in an outlet head (12), in that a guard funnel (13) surrounds the outlet head (12) and communicates with the equalising basin (11), and in that the venting pipe (16) penetrates into the riser pipe (10) above the bottom of the equalising basin (11).

3. Device according to Claim 1, characterised in that the riser pipe (10) ends in the equalising basin (11) in an outlet head (12), in that a guard funnel (13) surrounds the outlet head (12) and communicates with the equalising basin (11), and in that the venting pipe extends outside the riser pipe (10) and opens laterally into the riser pipe (10) at the compressed-air blow-out point.

**Revendications**

1. Dispositif pour éviter l'éjection de la soupape d'eau dans un puits d'eau (9) d'installations de stockage d'air comprimé sous pression constante pour des centrales électriques à turbines à gaz qui comprennent une caverne souterraine (1) pour le stockage de l'air comprimé et des conduits de liaison entre la caverne (1) et le compresseur ou la turbine à gaz, ainsi qu'un bassin d'égalisation (11) qui est en communication, par l'intermédiaire du puits d'eau (9), avec la caverne (1) outre une grille en tubes (2) se trouvant dans la caverne (1) et présentant des orifices d'aspiration (4) et une canalisation collectrice (7) raccordée à la grille de tubes (2) en communication avec celle-ci, s'étendant à l'extérieur de la caverne dans le puits d'eau (9) et se prolongeant dans ce puits vers le haut dans une colonne montante (10) qui s'ouvre dans le bassin d'égalisation (11), caractérisé en ce qu'un tuyau de ventilation (16) en communication avec une source d'air comprimé pénètre dans la colonne montante (10), le tube de ventilation (16) présentant une extrémité ouverte qui, dans la partie supérieure du puits d'eau (9), s'ouvre dans la colonne montante (10), la grille de tubes (2) étant solidement ancrée dans la caverne (1) en dessous de la partie la plus basse du puits d'eau et présentant des tubes verticaux ouverts vers le haut (5) qui s'ouvrent dans les tubes (3) de la grille de tubes et présentent des orifices d'aspiration (6).

2. Dispositif suivant la revendication 1, caractérisé en ce que la colonne montante (10) se termine dans le bassin d'égalisation (11) dans une tête de sortie (12), un entonnoir de déviation (13) entourant la tête de sortie (12) et communiquant avec le bassin d'égalisation (11) étant prévu et le tuyau de ventilation (16) pénétrant dans la colonne montante (10) au-dessus du fond du bassin d'égalisation (11).

3. Dispositif suivant la revendication 1, caractérisé en ce que la colonne montante (10) se termine dans le bassin d'égalisation (11) dans une tête de sortie, un entonnoir de déviation (13) entourant la tête de sortie (12) et communiquant avec le bassin d'égalisation (11) étant prévu et le tuyau de ventilation s'étendant à l'extérieur de la colonne montante (10) et pénétrant latéralement dans la colonne montante (10) au niveau de l'endroit d'éjection de l'air comprimé.

FIG.2

FIG.1